Europäisches Patentamt

European Patent Office

Office européen des brevets

(11) Numéro de publication : **0 360 669 B1**

# (12) FASCICULE DE BREVET EUROPEEN

(45) Date de publication du fascicule du brevet :
**01.07.92 Bulletin 92/27**

(21) Numéro de dépôt : **89402532.9**

(22) Date de dépôt : **15.09.89**

(51) Int. Cl.⁵ : **B24B 9/14,** B24B 17/02,
G05B 19/18

(54) **Restituteur de gabarit pour machine à meuler, en particulier pour verres de lunettes.**

(30) Priorité : **22.09.88 FR 8812381**

(43) Date de publication de la demande :
**28.03.90 Bulletin 90/13**

(45) Mention de la délivrance du brevet :
**01.07.92 Bulletin 92/27**

(84) Etats contractants désignés :
**BE DE ES GB IT**

(56) Documents cités :
**EP-A- 0 143 468**
**FR-A- 2 481 635**
**GB-A- 2 183 184**
**US-A- 3 688 642**

(73) Titulaire : **ESSILOR INTERNATIONAL, Cie
Générale d'Optique
1 Rue Thomas Edison, Echat 902
F-94028 Créteil Cédex (FR)**

(72) Inventeur : **Brule, François
16 Mail de la Demi-Lune
F-94500 Champigny-sur-Marne (FR)**
Inventeur : **Chansavoir, Alain
22 Rue Alexandre Bouché
F-77138 Luzancy (FR)**

(74) Mandataire : **CABINET BONNET-THIRION
95 Boulevard Beaumarchais
F-75003 Paris (FR)**

EP 0 360 669 B1

Jouve, 18, rue Saint-Denis, 75001 PARIS

**Description**

La présente invention concerne d'une manière générale les machines à meuler comportant, d'une part, un axe support de meule(s), et, d'autre part, un axe support de gabarit qui, coplanaire de l'axe support de meule(s), est porté par un caisson monté basculant par rapport à celui-ci, et dont l'extrémité surplombe une touche, ou touche d'appui, apte à fournir un appui à un gabarit convenablement rapporté sur cet axe support de gabarit.

Les machines à meuler de ce type sont notamment mises en oeuvre pour le débordage des lentilles ophtalmiques, ou verres, à rapporter sur une monture de lunettes.

Le plus classiquement, à ce jour, pour le débordage d'un tel verre de lunettes, il est rapporté, sur l'axe support de gabarit d'une telle machine à meuler, au droit de la touche d'appui correspondante, un gabarit dont le contour est identique à celui des cercles ou entourages de la monture de lunettes à équiper, cependant que ce verre de lunettes est lui-même rapporté sur cet axe support de gabarit, ou sur une broche solidaire en rotation de celui-ci, au droit, lui, d'une meule portée par l'axe support de meule(s).

L'engagement du verre de lunettes vis-à-vis de cette meule, et donc son débordage, se poursuivent d'eux-mêmes jusqu'à ce que, pour la position angulaire concernée de l'axe support de gabarit, le gabarit porté par celui-ci vienne au contact de la touche d'appui prévue à cet effet, et il suffit donc de faire tourner sur lui-même cet axe support de gabarit pour assurer progressivement le débordage recherché.

Ainsi donc, ce débordage, qui se fait par recopiage, revient à conjuguer, avec l'angle $\alpha$ que fait autour de lui-même l'axe support de gabarit par rapport à une référence donnée, une distance D déterminée entre cet axe support de gabarit et l'axe support de meule(s).

Il est maintenant proposé des machines à meuler dans lesquelles cette conjugaison, entre distance D et angle $\alpha$, se fait directement, à partir d'un appareil de lecture de contour propre à relever, sur la monture de lunettes à équiper, les données géométriques correspondantes, sans matérialisation d'un quelconque gabarit entre ce relevé et le débordage à effectuer.

C'est le cas, par exemple, pour la machine à meuler succinctement décrite dans le brevet français qui a été publié sous le No 2.481.635.

En pratique, tout se passe comme si était intégré, à cette machine à meuler, un restituteur de gabarit, qui, à partir du relevé effectué par un appareil de lecture de contour, la pilote directement en conséquence, le gabarit qu'il fournit étant, au mieux, simplement représenté par un tracé sur un écran.

Une telle machine à meuler est inévitablement relativement complexe, et donc coûteuse, et elle ne permet pas de mettre en oeuvre un réel gabarit dans les cas simples où un tel gabarit est de toute façon déjà disponible.

La disposition qui la caractérise ne permet pas, non plus, de faire bénéficier des avantages d'un restituteur de gabarit les machines à meuler qui, à l'origine, en sont dépourvues.

De même, si, dans le brevet américain No 3.688.642, il est décrit un restituteur de gabarit, ce restituteur de gabarit comporte en fait un style susceptible d'être défléchi sous le contrôle d'un organe mobile en X, Y, Z tandis que la machine concernée comporte un détecteur sensible à la déflexion de ce style, et, à la supposer possible, aucune combinaison de ce document avec le document précédent pourrait permettre de faire bénéficier des avantages d'un restituteur de gabarit les machines à meuler qui en sont initialement dépourvues.

La présente invention a au contraire d'une manière générale pour objet un restituteur de gabarit convenant avantageusement à celles-ci.

Ce restituteur de gabarit, qui est donc destiné aux machines à meuler comportant, d'une part, un axe support de meule(s), et, d'autre part, un axe support de gabarit, qui, coplanaire de l'axe support de meule(s), est porté par un caisson monté basculant par rapport à celui-ci, et dont l'extrémité surplombe une touche, ou touche d'appui, apte à fournir un appui, est du genre adapté à conjuguer la distance D entre l'axe support de meule(s) et l'axe support de gabarit avec l'angle $\alpha$ que fait autour de lui-même l'axe support de gabarit par rapport à une référence donnée, est caractérisé en ce que, constituant par lui-même une entité mécanique, il comporte un embout de montage, par lequel il est adapté à être engagé sur l'axe support de gabarit de la machine à meuler, aux lieu et place d'un gabarit, et qui est apte à être calé en rotation sur ledit axe support de gabarit, un châssis, qui, porté par ledit embout de montage, est monté rotatif par rapport à celui-ci, et, portés par ledit châssis, d'une part, un patin, par lequel il est adapté à porter sur la touche d'appui de la machine à meuler, et qui, sous le contrôle de moyens de commande, est monté mobile en translation sur ledit châssis, suivant une direction sensiblement perpendiculaire à l'axe dudit embout de montage, et, d'autre part, des moyens d'angulation propres à un contrôle d'orientation de cet embout de montage.

Constituant par lui-même une entité mécanique, le restituteur de gabarit suivant l'invention peut avantageusement équiper n'importe quelle machine à meuler classique, c'est-à-dire n'importe quelle machine à meuler, même préexistante, qui, ne fût-ce que pour des raisons de simplicité de construction, est dépourvue de tout restituteur de gabarit intégré.

Il permet avantageusement de coupler à une telle machine à meuler classique un appareil de lecture de contour, et, ainsi, de parfaire, progressivement, suivant une construction de type modulaire, un équipement initialement moins complet, en rendant alors en quelque sorte numérique la machine à meuler ainsi complétée.

De préférence, entre le châssis et l'embout de montage du restituteur de gabarit suivant l'invention intervient une douille, vis-à-vis de laquelle ledit châssis est monté rotatif, et qui, adaptée à être ancrée au caisson basculant de la machine à meuler, est elle-même montée rotative vis-à-vis dudit embout de montage, et, audit châssis, sont associés des moyens d'orientation propres à maintenir la direction de translation du patin dans le plan formé par l'axe support de meule(s) et l'axe support de gabarit.

Par exemple, ces moyens d'orientation comportent une came qui, apte à être liée à la touche d'appui de la machine à meuler, est en prise, par une boutonnière, avec au moins un ergot suiveur porté par le châssis.

Quoi qu'il en soit, il résulte de ces moyens d'orientation que la position angulaire de l'axe support de gabarit, et donc de l'objet à meuler, mesurée par l'angle , est appréciée par rapport au plan formé par cet axe support de gabarit et l'axe support de meule(s), sans donc qu'il y ait à tenir compte de l'angle de basculement que fait par ailleurs, par rapport à l'axe support de meule(s), le caisson basculant, portant l'axe support de gabarit, de la machine à meuler.

Ainsi, s'agissant du débordage d'un verre de lunettes, la distance à respecter entre l'axe support de gabarit et l'axe support de meule(s) pour une position angulaire donnée de l'axe support de gabarit est avantageusement la même, que ce verre de lunettes soit un verre gauche ou qu'il soit un verre droit.

Grâce à la réduction du temps de calcul et de transmission de données qui en résulte, le confort d'utilisation s'en trouve amélioré pour le praticien.

Les caractéristiques et avantages de l'invention ressortiront d'ailleurs de la description qui va suivre, à titre d'exemple, en référence aux dessins schématiques annexés sur lesquels :

la figure 1 est, avec des arrachements, une vue en perspective d'une machine à meuler susceptible d'être équipée d'un restituteur de gabarit suivant l'invention ;

la figure 2 est une vue schématique partielle, en élévation, de cette machine à meuler, suivant la flèche II de la figure 1 ;

la figure 3 est, à échelle supérieure, une vue partielle, en perspective, de ceux des éléments de cette machine à meuler qui sont plus particulièrement concernés par l'invention, avec, en position éclatée, le gabarit qui leur est usuellement associé ;

la figure 4 est une vue partielle, en perspective, analogue à celle de la figure 3, avec, en perspective, et des arrachements locaux, un restituteur de gabarit suivant l'invention substitué à ce gabarit, certains des constituants de ce restituteur de gabarit étant en position éclatée ;

les figures 5 et 6 sont, à échelle différente, des vues en coupe transversale de ce restituteur de gabarit, suivant, chacune respectivement, les lignes V-V et VI-VI de la figure 4 ;

la figure 7 en est une vue en coupe axiale, suivant, sensiblement, la ligne brisée VII-VII de la figure 5 ;

la figure 8 en est une autre vue en coupe axiale, suivant, sensiblement, la ligne VIII-VIII de la figure 6.

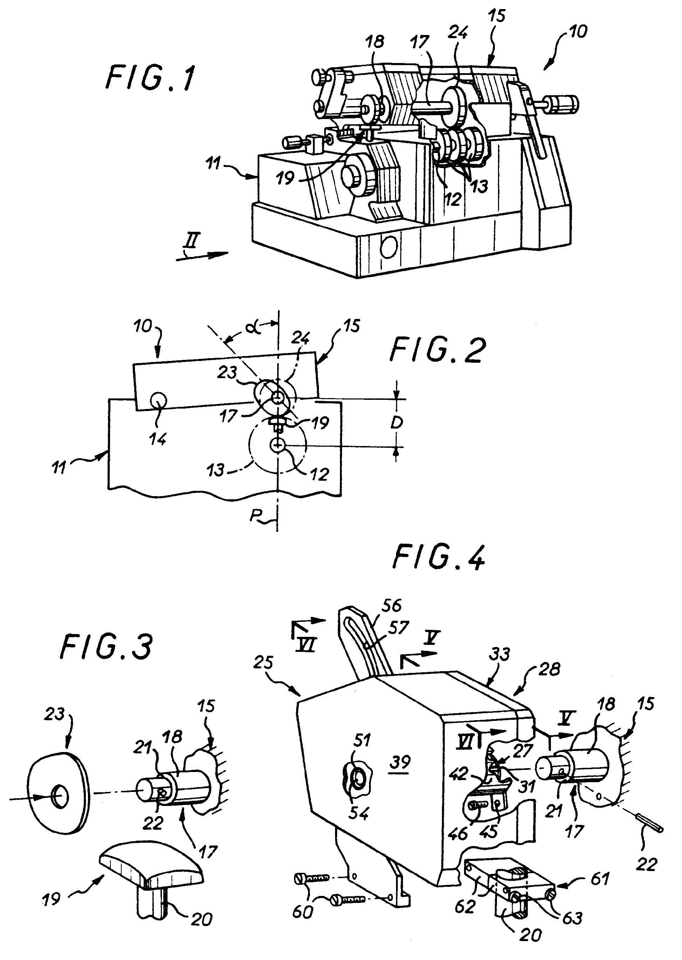

Sur la figure 1, on reconnaît, sous la référence générale 10, une machine à meuler du type de celle classiquement mise en oeuvre pour le débordage de verres de lunettes.

Cette machine à meuler étant bien connue par elle-même, et ne relevant pas en propre de la présente invention, elle ne sera par décrite dans ses détails ici.

Seuls en seront succinctement décrits les éléments nécessaires à la compréhension de l'invention.

Globalement, cette machine à meuler 10 comporte un bâti 11 sur lequel est monté rotatif un axe support de meule(s) 12, avec, calées en rotation sur celui-ci, une ou plusieurs meules 13, ici au nombre de trois.

Sur le bâti 11 est monté basculant, autour d'un axe 14 parallèle à l'axe support de meule(s) 12, un caisson 15.

Sur ce caisson basculant 15 est monté rotatif un axe support de gabarit 17, qui est coplanaire de l'axe support de meule(s) 12, et dont l'extrémité 18, à l'extérieur du caisson basculant 15, surplombe une touche 19, ou touche d'appui, apte, ainsi qu'il apparaîtra ci-après, à fournir un appui à l'ensemble.

Dans la forme de réalisation représentée, cet axe support de gabarit 17 est parallèle à l'axe support de meule(s) 12.

Soit P le plan correspondant.

Ce plan P est schématisé, en traits interrompus, par sa trace, sur la figure 2.

Dans la forme de réalisation représentée, la touche d'appui 19 se présente sous la forme d'un tampon de contour rectangulaire et à face supérieure bombée, porté par une colonnette 20.

Sur l'extrémité 18 de l'axe support de gabarit 17 peut être engagé, et solidarisé en rotation, entre un épaulement 21 de cette extrémité 18 et une goupille 22, un gabarit 23 dont le contour est à l'image de celui des cercles ou entourages de la monture de lunettes à équiper.

C'est ce gabarit 23 qui est destiné à porter par sa tranche sur la touche d'appui 19, et c'est donc par son intermédiaire que l'ensemble du caisson basculant 15 trouve alors un appui sur celle-ci.

Conjointement, sur l'extrémité interne de l'axe support de gabarit 17, ou sur une broche solidaire en rotation de celui-ci, peut être rapporté, dans le caisson basculant 15, le verre de lunettes 24 à déborder.

Pour son débordage, ce verre de lunettes 24 est amené au contact, par sa tranche, de l'une des meules 13.

L'axe support de meule(s) 12 et l'axe support de gabarit 17 étant l'un et l'autre rotatifs, le meulage dû à ce contact se poursuit jusqu'à ce que, pour chaque position angulaire de l'axe support de gabarit 17, le gabarit 23 soit au contact de la touche d'appui 19.

Soit D, figure 2, la distance entre l'axe support de gabarit 17 et l'axe support de meule(s) 12, et soit α l'angle que fait autour de lui-même cet axe support de gabarit 17 par rapport à une référence donnée.

En pratique, figure 2, cette référence est constituée par le plan P formé par l'axe support de meule(s) 12 et l'axe support de gabarit 17.

Pour que, une fois débordé, le verre de lunettes 24 soit à l'image du cercle ou entourage concerné de la monture de lunettes à équiper, il faut que, de ce verre de lunettes à ce cercle ou entourage, cette distance D et cet angle α soient conjugués de la même façon.

Du fait qu'il est calé en rotation sur le verre de lunettes 24, le gabarit 23 assure mécaniquement une telle conjugaison.

Suivant l'invention, il lui est substitué un restituteur de gabarit 25 propre à faire de même en fonction de données géométriques de distance D et d'angle α à lui fournies par un appareil de lecture de contour, non représenté, les relevant directement sur le cercle ou entourage concerné.

Le restituteur de gabarit 25 suivant l'invention, qui constitue donc par lui-même une entité mécanique, comporte, globalement, un embout de montage 27, par lequel il est apte à être engagé sur l'axe support de gabarit 17 de la machine à meuler 10, et, plus précisément, sur l'extrémité extérieure 18 de cet axe support de gabarit 17, aux lieu et place d'un gabarit 23, et qui est apte à être calé en rotation sur ledit axe support de gabarit 17, un châssis 28, qui, porté par ledit embout de montage 27, est monté rotatif par rapport à celui-ci, et, portés par ledit châssis 28, d'une part, un patin 29, par lequel il est adapté à porter sur la touche d'appui 19 de la machine à meuler 10, et qui, sous le contrôle de moyens de commande explicités ultérieurement, est monté mobile en translation suivant une direction T sensiblement perpendiculaire à l'axe dudit embout de montage 27, et, d'autre part, des moyens, qui, dits ici par simple commodité moyens d'angulation, sont propres à un contrôle de l'orientation de cet embout de montage 27 et qui seront également décrits plus en détail ultérieurement.

L'embout de montage 27, épaulé à l'image de l'extrémité 18 de l'axe support de gabarit 17, présente, suivant une génératrice, une fente 31 par laquelle, pour son calage en rotation sur cette extrémité 18 de l'axe support de gabarit 17, il est adapté à être engagé sur la goupille 22 portée par celle-ci.

Pour des raisons explicitées ultérieurement, son fond présente, axialement, un perçage 32 propre à sa commande en rotation.

Dans la forme de réalisation représentée, le châssis 28 est formé par deux flasques 33, 34, qui, parallèles l'un à l'autre, s'étendent globalement transversalement par rapport à l'axe de l'embout de montage 27, et qui, de place en place, sont reliés l'un à l'autre par des entretoises 35, en nombre ici limité à trois.

Le flasque 33, qui est relativement massif, et qui forme, sur sa face extérieure, des ailettes de refroidissement 36, s'étend, annulairement, autour de l'embout de montage 27, en présentant, pour ce faire, un évidement central 37.

Le flasque 34, qui est plus mince que le flasque 33, s'étend, lui, à distance de l'embout de montage 27.

Un capot 39 coiffe l'ensemble.

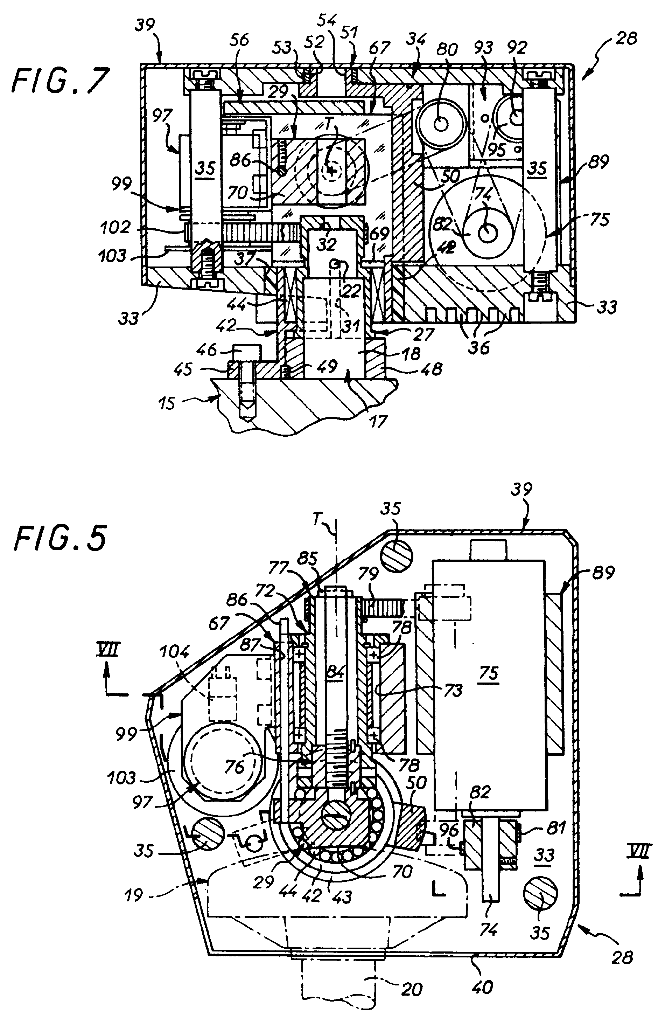

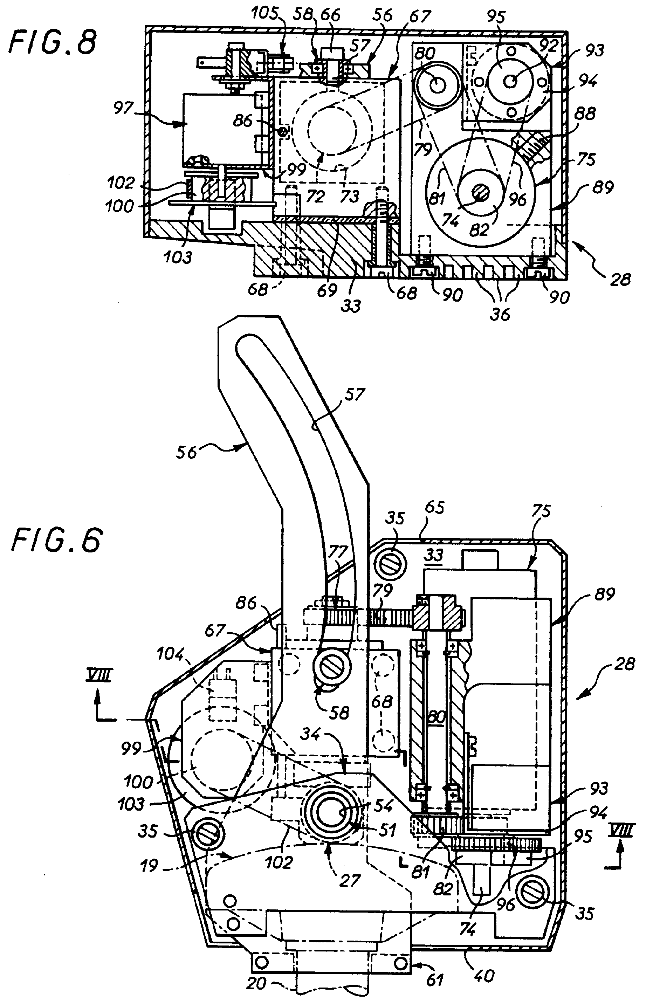

Sur sa tranche, ce capot présente, au droit du patin 29, une ouverture 40, pour permettre l'engagement de l'ensemble sur la touche d'appui 19 de la machine à meuler 10, figures 5 et 6.

Entre le châssis 28 ainsi constitué et l'embout de montage 27 intervient, dans la forme de réalisation représentée, une douille 42, vis-à-vis de laquelle, par l'évidement central 37 de son flasque 33, ledit châssis 28 est monté rotatif, avec interposition, dans cette forme de réalisation, d'une bague de frottement 43 en matière synthétique, et qui, adaptée à être ancrée au caisson basculant 15 de la machine à meuler 10, est elle-même montée rotative vis-à-vis dudit embout de montage 27, avec interposition, dans cette forme de réalisation, d'un roulement 44, entre elle et celui-ci.

Pour son ancrage au caisson basculant 15 de la machine à meuler 10, cette douille 42 présente, latéralement, à son extrémité externe, dans la forme de réalisation représentée, une patte 45 par laquelle elle peut être assujettie à ce caisson basculant 15 par une vis 46.

Il résulte en outre, de l'ancrage ainsi fait de la douille 42 sur le caisson basculant 15, le maintien axial de l'ensemble du restituteur de gabarit 25 vis-à-vis de ce caisson basculant 15.

En effet, la douille 42 et l'embout de montage 27 sont par ailleurs convenablement assujettis axialement l'un à l'autre.

Par exemple, et tel que représenté, figure 7, ils présentent l'un et l'autre, pour ce faire, des épaulements transversaux qu'une bague de frottement 48, retenue axialement par une vis 49, maintient en prise l'un avec l'autre.

Par un bras excentré 50, qui s'étend parallèlement à l'axe de l'embout de montage 27, à distance de celui-ci, de l'un à l'autre des flasques 33, 34 du châssis 28, la douille 42 est reliée à un embout de centrage 51, qui est coaxial de l'embout de montage 27, et vis-à-vis duquel, par un perçage 52 de son flasque 34, et avec interposition d'une bague de frottement 53 en matière synthétique, ledit châssis 28 est monté rotatif.

Ainsi, parallèlement à l'axe de l'embout de montage 27, le châssis 28 s'étend entre la douille 42 et cet embout de centrage 51, ce qui lui évite d'être en porte-à-faux.

Axialement, l'embout de centrage 51 présente un perçage 54 donnant accès au perçage 32 de l'embout de montage 27.

Au montage, il est ainsi avantageusement possible, de l'extérieur du châssis 28, de faire tourner sur lui-même l'embout de montage 27, à l'aide d'un quelconque outil, pour qu'il se présente correctement par rapport à l'extrémité 18 de l'axe support de gabarit 17 à équiper.

Au châssis 28 sont par ailleurs associés des moyens, dits ici par simple commodité moyens d'orientation, propres à maintenir la direction de translation T du patin 29 dans le plan P formé par l'axe support de meule(s) 12 et l'axe support de gabarit 17 de la machine à meuler 10.

Cette direction de translation T est représentée en traits interrompus sur la figure 5, et elle est schématisée par sa trace sur la figure 7.

Dans la forme de réalisation représentée, les moyens d'orientation associés au châssis 28 comportent une came 56, qui, apte à être liée à la machine à meuler 10, est en prise, par une boutonnière 57, avec au moins un ergot suiveur 58 porté par ce châssis 28.

Plus précisément, dans cette forme de réalisation, cette came 56, qui s'étend globalement transversalement par rapport à l'axe de l'embout de montage 27, est, à sa base, solidaire, par des vis 60, figure 4, d'un collier 61, par lequel elle est apte à être rapportée sur la colonnette 20 portant la touche d'appui 19 de la machine à meuler 10, et qui, par exemple, et tel que représenté, est lui-même constituée de deux demi-colliers 62 rendus solidaires l'un de l'autre par des vis 63.

A son autre extrémité, la came 56 est susceptible de faire saillie hors du châssis 28, la tranche correspondante du capot 39 rapporté sur celui-ci présentant à cet effet, à l'opposé de son évidement 40, un évidement 65, figure 6.

Conjointement, il n'est prévu qu'un seul ergot suiveur 58 dans cette forme de réalisation.

La forme de la boutonnière 57 s'en trouve simplifiée.

Il s'agit, en pratique, d'une boutonnière légèrement cintrée, sensiblement en arc de cercle.

Tout effort parasite sur le patin 29 se trouve aussi ainsi avantageusement évité.

En pratique, l'ergot suiveur 58 se trouve rapporté, par une vis 66, sur un bloc central 67, qui, par des vis 68, est rapporté sur le flasque 33 du châssis 28, avec interposition d'une plaquette d'isolation thermique 69, et que contourne, transversalement, le bras excentré 50 reliant la douille 42 à l'embout de centrage 51.

Dans la forme de réalisation représentée, et compte tenu des dispositions précédentes, le patin 29, qui est relativement massif, présente, pour contact avec la touche d'appui 19 de la machine à meuler 10, une surface plane 70.

Par ailleurs, les moyens de commande de ce patin 29 comportent, dans la forme de réalisation représentée, un vérin 72, de type vis-écrou, qui s'étend suivant la direction de translation T, à la faveur d'un évidement 73 du bloc central 67, et dont l'un quelconque des organes vis-écrou, calé sur le châssis 28, porte ledit patin 29, tandis que l'autre est calé en rotation sur l'arbre de sortie 74 d'un moteur 75.

En pratique, dans cette forme de réalisation, l'écrou 76 du vérin 72 est solidaire en rotation d'une douille tubulaire 77 qui s'étend suivant la direction de translation T, à la faveur de l'évidement 73 du bloc central 67, avec interposition, entre elle et celui-ci, de roulements 78 dûment entretoisés, et qui, par une courroie crantée 79, engrène avec un arbre intermédiaire 80 avec lequel engrène également, par une courroie crantée 81, un pignon 82 calé sur l'arbre de sortie 74 du moteur 75.

Conjointement, la vis 84 du vérin 72, qui s'étend dans l'axe de la douille 77, en étant en prise à vissage avec l'écrou 76 dont est solidaire celle-ci, porte, à l'une de ses extrémités, le patin 29, tandis que, à l'autre de ses extrémités, elle porte une bague d'arrêt 85.

Du patin 29 est solidaire une tige de guidage 86 qui, parallèle à la direction de translation T, est engagée à coulissement dans un alésage 87 prévu à cet effet dans le bloc central 67.

Le moteur 75 est convenablement rapporté, par exemple par des vis 88, sur un bloc de support 89 lui-même rapporté, par des vis 90, sur le flasque 33 du châssis 28.

De préférence, le bloc de support 89 est en matériau bon conducteur de la chaleur, de l'aluminium par exemple, pour l'évacuation, vers les ailettes 36 du flasque 33, de la chaleur dégagée par le moteur 75.

Sur l'arbre de sortie 74 de ce moteur 75 est calé, outre l'arbre intermédiaire 80, et, par celui-ci, la vis 84 du vérin 72, l'arbre de sortie 92 d'un codeur 93, en pratique un codeur optique, propre à en relever l'orientation angulaire autour de son axe.

Par exemple, et tel que représenté, ce codeur 93 est rapporté, par une équerre 94, sur le bloc de support 89, et un pignon 95 calé sur son arbre de sortie 92 engrène, par une courroie crantée 96, avec le pignon 82 calé sur l'arbre de sortie 74 du moteur 75.

De même, les moyens d'angulation associés à l'embout de montage 27 comportent, dans la forme de réalisation représentée, un codeur 97, en pratique un codeur optique, dont l'arbre de sortie 98 est calé en rotation sur l'embout de montage 27.

En pratique, ce codeur 97 est porté par une équerre 99, elle-même convenablement rapportée sur le bloc central 67, et, sur son arbre de sortie 98, est calé en rotation un pignon 100 qui, par une courroie crantée 102, engrène avec l'embout de montage 27.

Sur l'arbre de sortie 98 du codeur 97 est en outre calé en rotation un disque 103, qui, en coopération avec une fourche de lecture 104, est apte à la remise à zéro de l'ensemble.

Enfin, dans la forme de réalisation représentée, l'équerre 99 porte, au droit de la came 56, pour actionnement par celle-ci en fin de cycle, un contact 105.

En service, le codeur 93 relève en permanence la position angulaire de l'arbre de sortie 74 du moteur 75, et, donc, par cet arbre de sortie 74, celle de l'écrou 76 du vérin 72.

Le relevé correspondant est à l'image de la distance D à respecter.

Conjointement, le codeur 97 relève en permanence la position angulaire de l'embout de montage 27, et donc celle de l'axe support de gabarit 17.

Le relevé correspondant est à l'image de l'angle α également à respecter.

Compte tenu de ces relevés, et compte tenu des données de distance et d'angle fournies par ailleurs par l'appareil de lecteur de contour associé, le moteur 75 est commandé en conséquence, dans un sens ou dans l'autre.

En fin de cycle, c'est-à-dire lorsque le caisson basculant 15 de la machine à meuler 10 est ramené en position relevée par rapport au bâti 11 de celle-ci, la came 56 vient agir sur le contact 105 prévu à cet effet, de manière à ce que, par sécurité, aucun nouveau cycle de travail ne soit initié si le cycle de travail précédent n'est pas achevé.

Au prix de complications complémentaires, la came 56 pourrait être montée pivotante par rapport à la touche d'appui 19 de la machine à meuler 10, en coopération alors en coulissement avec deux ergots suiveurs solidaires à distance l'un de l'autre du châssis 28.

En outre, au lieu de ne constituer, comme décrit ci-dessus, que de simples moyens de mesure angulaire, les moyens d'angulation associés à l'embout de montage 27 pourraient également constituer, à l'égard de celui-ci, des moyens de commande en position angulaire.

Enfin, l'axe support de gabarit 17 n'est pas nécessairement parallèle à l'axe support de meule(s) 12.

Au contraire, et suivant des dispositions connues par elles-mêmes, ces deux axes peuvent faire un angle entre eux, notamment dans le cas de la mise en oeuvre de meules coniques.

Dans un tel cas, la distance D à considérer est celle séparant ces deux axes dans le plan qui, perpendiculaire à l'axe support de gabarit 17, passe par le point de contact théorique entre le gabarit 23 et la touche d'appui 19.

## Revendications

1. Restituteur de gabarit pour machine à meuler comportant, d'une part, un axe support de meule(s) (12), et, d'autre part, un axe support de gabarit (17), qui, coplanaire de l'axe support de meule(s) (12), est porté par un caisson (15) monté basculant par rapport à celui-ci, et dont l'extrémité (18) surplombe une touche (19), ou touche d'appui, apte à fournir un appui, ce restituteur de gabarit étant du genre adapté à conjuguer la distance D entre l'axe support de meule(s) (12) et l'axe support de gabarit (17) avec l'angle α que fait autour de lui-même l'axe support de gabarit (17) par rapport à une référence donnée, et étant caractérisé en ce que, constituant par lui-même une entité mécanique, il comporte un embout de montage (27), par lequel il est adapté à être engagé sur l'axe support de gabarit (17) de la machine à meuler (10), aux lieu et place d'un gabarit (23), et qui est apte à être calé en rotation sur ledit axe support de gabarit (17), un châssis (28), qui, porté par ledit embout de montage (27), est monté rotatif par rapport à celui-ci, et, portés par ledit châssis (28), d'une part, un patin (29), par lequel il est adapté à porter sur la touche d'appui (19) de la machine à meuler (10), et qui, sous le contrôle de moyens de commande, est monté mobile en translation sur ledit châssis (28), suivant une direction (T) sensiblement perpendiculaire à l'axe dudit embout de montage (27), et, d'autre part, des moyens d'angulation propres à un contrôle de l'orientation de cet embout de montage (27) autour de son axe.

2. Restituteur de gabarit suivant la revendication 1, caractérisé en ce que, entre le châssis (28) et l'embout de montage (27), intervient une douille (42), vis-à-vis de laquelle ledit châssis (28) est monté rotatif, et qui, adaptée à être ancrée au caisson basculant (15) de la machine à meuler (10), est elle-même montée rotative vis-à-vis dudit embout de montage (27), et en ce que, audit châssis (28), sont associés des moyens d'orientation propres à maintenir la direction de translation (T) du patin (29) dans le plan (P) formé par l'axe support de meule(s) (12) et l'axe support de gabarit (17).

3. Restituteur de gabarit suivant la revendication 2, caractérisé en ce que lesdits moyens d'orientation comportent une came (56), qui, apte à être liée à la touche d'appui (19) de la machine à meuler (10), est en prise, par une boutonnière (57) avec au moins un ergot suiveur (58) porté par le châssis (28).

4. Restituteur de gabarit suivant la revendication 3, caractérisé en ce que, la touche d'appui (19) de la machine à meuler (10) étant portée par une colonnette (20), la came (56) des moyens d'orientation associés au châssis (28) est solidaire d'un collier (61) par lequel elle est apte à être rapportée sur ladite colonnette (20), et, conjointement, un seul ergot suiveur (58) est prévu sur ledit châssis (28).

5. Restituteur de gabarit suivant l'une quelconque des revendications 1 à 4, caractérisé en ce que, pour contact avec la touche d'appui (19) de la machine à meuler (10), le patin (29) présente une surface plane (70).

6. Restituteur de gabarit suivant l'une quelconque des revendications 1 à 5, caractérisé en ce que les moyens de commande du patin (29) comportent un vérin vis-écrou (72) dont l'un quelconque des organes vis-écrou (76, 84), calé sur le châssis (28), porte ledit patin (29), tandis que l'autre est calé en rotation sur l'arbre de sortie (74) d'un moteur (75).

7. Restituteur de gabarit suivant la revendication 6, caractérisé en ce que sur l'arbre de sortie (74) dudit moteur (75) est en outre calé en rotation l'arbre d'un codeur (93).

8. Restituteur de gabarit suivant l'une quelconque des revendications 1 à 7, caractérisé en ce que les moyens d'angulation associés à l'embout de montage (27) comportent un codeur (97) dont l'arbre est calé en rotation sur ledit embout de montage (27).

9. Restituteur de gabarit suivant la revendication 2, caractérisé en ce que parallèlement à l'axe de l'embout de montage (27), le châssis (28) s'étend entre la douille (42) et un embout de centrage (51), qui, coaxial dudit embout de montage (27), est relié à ladite douille (42) par un bras excentré (50).

10. Restituteur de gabarit suivant la revendication 9, caractérisé en ce que ledit embout de centrage (51) présente axialement un perçage (54).

11. Restituteur de gabarit suivant l'une quelconque des revendications 1 à 10, caractérisé en ce que la référence par rapport à laquelle est apprécié l'angle $\alpha$ que fait autour de lui-même l'axe support de gabarit (17) est constituée par le plan (P) formé par cet axe support de gabarit (17) et l'axe support de meule(s) (12).

**Patentansprüche**

1. Schablonen-Wiedergabegerät für Schleifmaschine, mit einerseits einer Schleifträgerachse (12) und andererseits einer Schablonenträgerachse (17), die mit der Schleifträgerachse (12) koplanar ist, das durch einen Kasten (15) getragen ist, der schaukelnd bzw. klappbar bezüglich dessen angebracht ist, und dessen Ende (18) über eine Backe (19) oder Anlagefläche übersteht, welche geeignet ist, eine Anlage bereitzustellen, wobei das Schablonen-Wiedergabegerät von der Art ist, die geeignet ist, den Abstand (D) zu verbinden zwischen der Schleifträgerachse (12) und der Schablonenträgerachse (17) mit dem Winkel $\alpha$, den um sich selbst die Schablonenträgerachse (17) bezüglich eines gegebenen Bezugspunkts bildet, dadurch gekennzeichnet, daß es durch sich selbst eine mechanische Gesamtheit bildet und einen Montageansatz (27) aufweist, durch den es geeignet ist, auf der Schablonenträgerachse (17) der Schleifmaschine (10) eingegriffen zu werden, und zwar an Ort und Stelle einer Schablone (23), und das geeignet ist, festgekeilt zu werden in Drehung auf der Schablonenträgerachse (17), ein Chassis (28), das getragen durch den Montageansatz (27) drehbar bezüglich dessen angebracht ist und getragen durch das Chassis (28), einerseits eine Kufe (29), durch die es geeignet ist, auf der Anlagefläche (19) der Schleifmaschine (10) zu ruhen, und das unter der Steuerung von Steuermitteln beweglich in Translation auf dem Chassis (28) angebracht ist, und zwar in einer Richtung (T), die im wesentlichen rechtwinklig zur Achse des Montageansatzes (27) ist, und andererseits Winkelmittel, die geeignet sind zu einer Steuerung der Orientierung des Montageansatzes (27) um seine Achse.

2. Schablonen-Wiedergabegerät nach Anspruch 1, dadurch gekennzeichnet, daß zwischen dem Chassis (28) und dem Montageansatz (27) eine Hülse (42) angeordnet ist, gegenüber der das Chassis (28) drehbar angebracht ist, und die geeignet ist, an dem schwingenden Kasten (15) der Schleifmaschine (10) verankert zu sein und die selbst drehbar gegenüber dem Montageansatz (27) angebracht ist, und daß mit dem Chassis (28) Orientierungsmittel verbunden sind, die geeignet sind, die Translationsrichtung (T) der Kufe (29) in der Ebene (P) aufrechtzuerhalten, die durch die Schleifträgerachse (12) und die Schablonenträgerachse (17) gebildet ist.

3. Schablonen-Wiedergabegerät nach Anspruch 2, dadurch gekennzeichnet, daß die Orientierungsmittel eine Nocken- bzw. eine Kurvenscheibe (56) aufweisen, die geeignet ist, mit der Anlagefläche (19) der Schleifmaschine (10) verbunden zu werden und im Eingriff ist durch eine längliche Aussparung (57) mit wenigstens einem Nachführvorsprung (28), der durch das Chassis (28) getragen ist.

4. Schablonen-Wiedergabegerät nach Anspruch 3, dadurch gekennzeichnet, daß die Anlagefläche (19) der Schleifmaschine (10) durch eine Säule (20) getragen wird, wobei die Kurvenscheibe (56) der Orientierungsmittel, die mit dem Chassis (28) verbunden sind, einstückig ausgebildet ist mit einem Ring (61), durch den sie geeignet ist, an die Säule (20) angesetzt zu sein und gleichzeitig ist ein einzelner Nachfolgevorsprung (58) auf dem Chassis (28) vorgesehen ist.

5. Schablonen-Wiedergabegerät nach einem der Ansprüche 1 bis 4, dadurch gekennzeichnet, daß für den Kontakt mit der Anlagefläche (19) der Schleifmaschine (10) die Kufe (29) eine plane Fläche (70) aufweist.

6. Schablonen-Wiedergabegerät nach einem der Ansprüche 1 bis 5, dadurch gekennzeichnet, daß die Steuermittel der Kufe (29) eine Schraubenmutterwinde bzw. einen Hebel (72) aufweisen, von dem eines der Schraubenmutterorgane (76, 84), das auf dem Chassis (28) festgekeilt ist, die Kufe (29) trägt, während das andere in Rotation auf der Ausgangswelle (74) eines Motors (75) festgekeilt ist.

7. Schablonen-Wiedergabegerät nach Anspruch 6, dadurch gekennzeichnet, daß auf der Ausgangswelle (74) des Motors (75) ferner in Rotation die Welle eines Codiergerätes (93) festgekeilt ist.

8. Schablonen-Widergabegerät nach einem der Ansprüche 1 bis 7, dadurch gekennzeichnet, daß die Winkelmittel, die mit dem Montageansatz (27) verbunden sind, ein Codiergerät (97) aufweisen, dessen Welle in Rotation auf dem Montageansatz (27) gekeilt ist.

9. Schablonen-Widergabegerät nach Anspruch 2, dadurch gekennzeichnet, daß parallel zur Achse des Montageansatzes (27) das Chassis (28) sich zwischen der Hülse (42) und einem Zentrieransatz (51) erstreckt, welcher koaxial mit dem Montageansatz (27) mit der Hülse (42) durch einen exzentrischen Arm (50) verbunden ist.

10. Schablonen-Widergabegerät nach Anspruch 9, dadurch gekennzeichnet, daß der Zentrieransatz (51) axial eine Bohrung (54) aufweist.

11. Schablonen-Widergabegerät nach einem der Ansprüche 1 bis 10, dadurch gekennzeichnet, daß der Bezugspunkt, bezüglich dessen der Winkel α gemessen wird, den um sich selbst die Schablonenträgerachse (17) bildet, gebildet wird durch die Ebene (P), die durch diese Schablonenträgerachse (17) und die Schleifträgerachse (12) gebildet wird.


**Claims**

1. A pattern simulator for a grinding machine comprising on the one hand a support shaft (12) for a grinding wheel or wheels and on the other hand a pattern support shaft (17) which, coplanar with the grinding wheel support shaft (12), is carried by a box member (15) which is mounted pivotably with respect thereto and the end (18) of which overhangs a stop (19) or bearing stop for providing a support action, the pattern simulator being of the type adapted to conjugate the distance D between the grinding wheel support shaft (12) and the pattern support shaft (17) with the angle α that the pattern support shaft (17) performs about itself relative to a given reference, and being characterised in that, constituting in itself a mechanical entity, it comprises a mounting connecting portion (27) by means of which it is adapted to be engaged on to the pattern support shaft (17) of the grinding machine (10), in place of a pattern (23), and which is capable of being keyed in respect of rotary movement on said pattern support shaft (17), a frame (28) which, carried by said mounting connecting portion (27), is mounted rotatably with respect thereto and, carried by said frame (28), on the one hand, a skid (29) by means of which it is adapted to bear against the bearing stop (19) of the grinding machine (10) and which, under the control of actuating means, is mounted movably with a translatory movement on said frame (28) in a direction (T) substantially perpendicular to the axis of said mounting connecting portion (27) and, on the other hand, angulation means for controlling the orientation of the mounting connecting portion (27) about its axis.

2. A pattern simulator according to claim 1 characterised in that disposed between the frame (28) and the mounting connecting portion (27) is a bush (42) in relation to which said frame (28) is mounted rotatably and which, adapted to be anchored to the pivotable box member (15) of the grinding machine (10), is itself mounted rotatably with respect to said mounting connecting portion (27), and that associated with said frame (28) are orientation means for maintaining the direction of translatory movement (T) of the skid (29) in the plane (P) formed by the grinding wheel support shaft (12) and the pattern support shaft (17).

3. A pattern simulator according to claim 2 characterised in that said orientation means comprise a cam (56) which, capable of being connected to the bearing stop (19) of the grinding machine (10), is in engagement by way of a slot (57) with at least one follower pin (58) carried by the frame (28).

4. A pattern simulator according to claim 3 characterised in that, the bearing stop (19) of the grinding machine (10) being carried by a column member (20), the cam (56) of the orientation means which are associated with the frame (28) is fixed with respect to a collar (61) by means of which it is capable of being fitted to said column member (20) and jointly a single follower pin (58) is provided on said frame (28).

5. A pattern simulator according to any one of claims 1 to 4 characterised in that, for contact with the bearing stop (19) of the grinding machine (10), the skid (29) has a flat surface (70).

6. A pattern simulator according to any one of claims 1 to 5 characterised in that the means for actuation of the skid (29) comprise a screw-and-nut jack (27) of which either one of the screw-nut members (76, 84) which is keyed on the frame (28) carries said skid (29) while the other member is non-rotatably keyed to the output shaft (74) of a motor (75).

7. A pattern simulator according to claim 6 characterised in that the shaft of an encoder (93) is further non-rotatably keyed on the output shaft (74) of said motor (75).

8. A pattern simulator according to any one of claims 1 to 7 characterised in that the angulation means associated with the mounting connecting portion (27) comprise an encoder (97) whose shaft is non-rotatably keyed on said mounting connecting portion (27).

9. A pattern simulator according to claim 2 characterised in that parallel to the axis of the mounting connecting portion (27) the frame (28) extends between the bush (42) and a centering connecting portion (51) which, in coaxial relationship with said mounting connecting portion (27), is connected to said bush (42) by an eccentric arm (50).

10. A pattern simulator according to claim 9 characterised in that said centering connecting portion (51) is axially provided with a bore (54).

11. A pattern simulator according to any one of claims 1 to 10 characterised in that the reference with respect to which the angle α that the pattern support shaft (17) performs about itself is evaluated is formed by the plane (P) defined by said pattern support shaft (17) and the grinding wheel support shaft (12).

FIG.1

FIG.2

FIG.4

FIG.3

FIG.7

FIG.5

FIG.8

FIG.6